# EUROPEAN PATENT SPECIFICATION

(11) **EP 3 389 296 B1**
(45) Date of publication and mention of the grant of the patent: **03.06.2020**
(21) Application number: 17166497.2
(22) Date of filing: 13.04.2017
(51) Int. Cl.: H04W 12/00, H04L 29/06, H04W 8/00

(54) **MANAGING AND/OR HANDLING USAGE OF SERVICES RESPECTIVELY SERVICE APPLICATIONS**
VERWALTUNG UND/ODER HANDHABUNGSVERWENDUNG VON DIENSTEN BZW. DIENSTANWENDUNGEN
GESTION ET/OU TRAITEMENT DE L'UTILISATION DES SERVICES RESPECTIFS DES APPLICATIONS DE SERVICE

(43) Date of publication of application: 17.10.2018
(73) Proprietor: Vodafone GmbH, 40549 Düsseldorf (DE)
(72) Inventor: BINDRIM, Walter, 45721 Haltern am See (DE); CORREIA FERNANDES, Antonio Carlos, 40489 Düsseldorf (DE); HÄFFNER, Walter, 71640 Ludwigsburg (DE)
(74) Representative: Weisbrodt, Bernd

(56) References cited:
- WO-A1-01/90968
- WO-A2-2006/083958
- US-B1- 9 139 091

## Description

The field of the present invention relates, generally, to managing and/or handling the usage of services respectively service applications, especially communications systems allowing a customer the usage of services with devices, especially mobile services with mobile devices.

The present invention relates to a method for managing and/or handling usage of services respectively service applications via a communications network of a communications system. The communications system comprising at least one customer entity, at least one infrastructure entity capable to use services respectively service applications, at least one services provider respectively service applications provider entity and at least one communications agent entity.

The communications agent maintains a database, which is used for a communication setup.

The present invention further relates to a communications system for managing and/or handling usage of services respectively service applications via a communications network of the communications system. The communications system comprising at least one customer entity, at least one infrastructure entity capable to use services respectively service applications, at least one services provider respectively service applications provider entity and at least one communications agent entity. The communications agent maintains a database, which is used for a communication setup.

There is a need to offer customers respectively users of services and/or devices specific customized services. A further need with this a secure and trustable communication for all communication partners, especially regarding a non-traceable manner such that privacy is given for a customer with regard to the infrastructure entity and/or the services respectively service applications he uses/used.

As a technical solution, the present invention proposes a method for managing and/or handling usage of services respectively service applications via a communications network of a communications system, the communications system comprising at least one customer entity, at least one infrastructure entity capable to use services respectively service applications at least one services provider respectively service applications provider entity and at least one communications agent entity maintaining
a customers database storing at least one information item regarding at least one customer entity,
   with the at least one information item regarding a customer entity customer-specific respectively customer-preferred information items and/or parameters with regard to the usage of a service respectively service application and/or with regard to the usage of an infrastructure entity are determined/identified or determinable/identifiable from the customers database by the communications agent entity,
a infrastructures database storing at least one information item regarding at least one infrastructure entity,
   with the at least one information item regarding an infrastructure entity at least one service respectively one service application the infrastructure entity is capable to use is determined/identified or determinable/identifiable from the infrastructure database by the communications agent entity,
and
a services database storing at least one information item regarding at least one service respectively service application entity,
   with the at least one information item regarding a service respectively service application entity at least one service and/or service capability the service respectively service application entity is capable to provide is determined/identified or determinable/identifiable from the services database by the communications agent entity,
the method comprising the following steps:
- obtaining/receiving at an infrastructure entity at least one information item regarding a customer entity;
- creating at the infrastructure entity a first identification element by using the obtained/received information item regarding a customer entity;
- sending/transmitting the first identification element from the infrastructure entity to the communications agent entity;
- determining/identifying at the communications agent entity at least one information item regarding a customer entity out of the obtained/received first identification element, preferably by using at least one information item regarding the infrastructure entity;
- performing a customer database query with the determined/identified information item regarding a customer entity by the communications agent entity to determine/identify customer-specific respectively customer-preferred information items and/or parameters with regard to the usage of a service respectively service application entity and/or with regard to the usage of an infrastructure entity;
- performing a services database query with the determined/identified customer-specific respectively customer-preferred information items and/or parameters with regard to the usage of a service respectively service application entity and/or with regard to the usage of an infrastructure entity by the communications agent entity to determine/identify a services provider respectively service applications provider entity;
- sending/transmitting the first identification element from the communications agent entity to the determined/identified services provider respectively service applications provider entity;
- creating at the services provider respectively service applications provider entity a second identification element by using the sent/transmitted first identification element, wherein the second identification element is created as a new infrastructure ID, IID, out of an infrastructure number, a service number and a services provider entity ID;
- sending/transmitting the second identification element from the services provider respectively service applications provider entity to the communications agent entity;
- sending/transmitting the second identification element from the communications agent entity to the infrastructure entity;
- using the second identification element at the infrastructure entity for a communication setup between the infrastructure entity and the services provider respectively service applications provider entity via the communications agent entity, preferably with certificates according to a standard of the communication network of the communication system.

A customer entity according to the present invention advantageously is an identification element or identification information item, preferably an electronic device or provided by such device, especially a mobile device (UE) operateable in a mobile radio network according to at least one radio network standard, a key, for example a vehicle key, an apartment key, a key card, a badge and/or so called intelligent keys, a device comprising a RFID chip, a RFID reader and/or a finger-scanner, eye-scanner, fingerprint-reader and or devices for face and/or voice or the like biometrics recognition, for example DNA. Advantageously the customer entity is any combination of such identification elements and/or identification information items, for example a mobile device ID and a vehicle key ID and biometrics of a customer respectively user. A further advantageously embodiment of the present invention provides a customer entity as a device respectively device entity a customer/user uses to identify himself, like for example an eye scanner or a mobile device.

A further object of the present invention is a customer entity as a device comprising means designed and/or adapted to perform the steps of a method according to the present invention performed by the customer entity, preferably with a communication system according to the present invention and/or a communication agent entity according to the present invention.

A infrastructure entity according to the present invention advantageously is a car, a motorbike, a bike, an apartment, a house, a hotel room, an office room, a so called smart meter regarding power, water, trash, gas, and the like, a so called smart home system, a so called smart watch, and/or or the like. According to the present invention an infrastructure entity is a combination or group of the mentioned devices and/or entities. The infrastructure entity advantageously comprises an identification element or identification information item, which preferably is secured and not respectively not easily changeable, for example like a RFID for identification.

A service respectively service application entity according to the present invention advantageously is a service like for example downloading a profile for a service, for example heating, entertainment and/or the like, security, especially to identify an infrastructure entity and a customer entity, preferred for and/or with so called loT devices, exchange of infrastructure telemetry information, manage secondary devices like e.g. connected smartphones or smartwatches with the infrastructure entity.

The invention is based upon the knowledge that a secure and trustable communication for all communication partners, especially regarding a non-traceable manner such that privacy is given for a customer with regard to the infrastructure entity and/or the services respectively service applications he uses/used is given, especially as a specific customized services is given with the communication agent entity, which according to the present invention is advantageously in the role of an access provider and/or a certification authority, is the entity that advantageously issues and/or validates all the certificates used by the customer entity, the infrastructure entity and/or the service respectively service application entity. An advantageously embodiment of the present invention suggests, that only when all the initial authentications are made and granted, the communication agent entity can authorize the following transactions, ensuring that all entities, namely the customer entity, the infrastructure entity and/or the service respectively service application entity, are correctly identified. In a preferred embodiment of the present invention, the communication agent entity acts as a certification authority.

An advantageously embodiment of the method according to the present invention is characterized in that a secure connection is used for communication between the communications agent entity and the infrastructure entity, for communication between the communications agent entity and the services provider respectively service applications provider entity and/or for communication between the communications agent entity and the customer entity, preferably an IPSec tunnel, which is established by the communications agent entity respectively.

A further advantageously embodiment of the method according to the present invention is characterized in that the first identification element is encrypted on side of the infrastructure entity and decrypted on side of the communications agent entity, preferably with a key that is only known to the communications agent entity and the infrastructure entity.

A further advantageously embodiment of the method according to the present invention is characterized in that the second identification element is encrypted on side of the services provider respectively service applications provider entity and decrypted on side of the communications agent entity, preferably with a key that is only known to the communications agent entity and the services provider respectively service applications provider entity.

The method according to the present invention is advantageously further characterized in that none of the databases - so the customers database, the infrastructures database respectively the services database - having information regarding the other databases - so the infrastructures database and the services database, the customers database and the services database, respectively the customers database and the infrastructures database. According to the present invention it is advantageously further possible, that the customers database, the infrastructures database and the services database are maintained within different storage areas of one database entity, whereby it is ensured, that none of the databases - so the customers database, the infrastructures database respectively the services database - having information regarding the other databases - so the infrastructures database and the services database, the customers database and the services database, respectively the customers database and the infrastructures database.

A further advantageously embodiment of the method according to the present invention is characterized in that the communications agent entity
- gets a preferably encrypted information item regarding at least one infrastructure entity from an infrastructure entity
   and/or
   gets a preferably encrypted information item regarding at least one service respectively service application entity from a service respectively service application entity,
   whereby the communications agent entity uses the information item regarding at least one infrastructure entity and/or the information item regarding at least one service respectively service application entity for performing a customers database query;
- gets a preferably encrypted information item regarding at least one customer entity from a customer entity
   and/or
   gets a preferably encrypted information item regarding at least one service respectively service application entity from a service respectively service application entity,
   whereby the communications agent entity uses the information item regarding at least one customer entity and/or the information item regarding at least one service respectively service application entity for performing a infrastructure database query;
   and/or
- gets a preferably encrypted information item regarding at least one customer entity from a customer entity
   and/or
   gets a preferably encrypted information item regarding at least one infrastructure entity from an infrastructure entity,
   whereby the communications agent entity uses the information item regarding at least one customer entity and/or the information item regarding at least one infrastructure entity for performing a services database query.

As a technical solution, the present invention further proposes a communications system for managing and/or handling usage of services respectively service applications via a communications network of the communications system, the communications system comprising at least one customer entity, at least one infrastructure entity capable to use services respectively service applications, at least one services provider respectively service applications provider entity and at least one communications agent entity maintaining
a customers database storing at least one information item regarding at least one customer entity,
   with the at least one information item regarding a customer entity customer-specific respectively customer-preferred information items and/or parameters with regard to the usage of a service respectively service application entity and/or with regard to the usage of an infrastructure entity are determined/identified or determinable/identifiable from the customers database by the communications agent entity,
an infrastructures database storing at least one information item regarding at least one infrastructure entity,
   with the at least one information item regarding an infrastructure entity at least one service respectively one service application entity the infrastructure entity is capable to use is determined/identified or determinable/identifiable from the infrastructure database by the communications agent entity,
and
a services database storing at least one information item regarding at least one service respectively service application entity,
   with the at least one information item regarding a service respectively service application entity at least one service and/or service capability the service respectively service application entity is capable to provide is determined/identified or determinable/identifiable from the services database by the communications agent entity, wherein
the communications system is further comprising:
- Means for obtaining/receiving at an infrastructure entity at least one information item regarding a customer entity;
- means for creating at the infrastructure entity a first identification element by using the obtained/received information item regarding a customer entity;
- means for sending/transmitting the first identification element from the infrastructure entity to the communications agent entity;
- means for determining/identifying at the communications agent entity at least one information item regarding a customer entity out of the obtained/received first identification element, preferably by using at least one information item regarding the infrastructure entity;
- means for performing a customer database query with the determined/identified information item regarding a customer entity by the communications agent entity to determine/identify customer-specific respectively customer-preferred information items and/or parameters with regard to the usage of a service respectively service application entity and/or with regard to the usage of an infrastructure entity;
- means for performing a services database query with the determined/identified customer-specific respectively customer-preferred information items and/or parameters with regard to the usage of a service respectively service application and/or with regard to the usage of an infrastructure entity by the communications agent entity to determine/identify a services provider respectively service applications provider entity;
- means for sending/transmitting the first identification element from the communications agent entity to the determined/identified services provider respectively service applications provider entity;
- means for creating at the services provider respectively service applications provider entity a second identification element by using the sent/transmitted first identification element;
- means for sending/transmitting the second identification element from the services provider respectively service applications provider entity to the communications agent entity;
- means for sending/transmitting the second identification element from the communications agent entity to the infrastructure entity;
   and/or
- means for using the second identification element at the infrastructure entity for a communication setup between the infrastructure entity and the services provider respectively service applications provider entity via the communications agent entity, preferably with certificates according to a standard of the communication network of the communication system.

An further embodiment of the communications system according to the present invention is advantageously characterized in that the communications system further comprising means for a secure connection for communication between the communications agent entity and the infrastructure entity, for communication between the communications agent entity and the services provider respectively service applications provider entity and/or for communication between the communications agent entity and the customer entity, preferably an IPSec tunnel, which is established/establishable by the communications agent entity respectively.

A further embodiment of the communications system according to the present invention is advantageously characterized in that the communications system further comprising means for encrypting the first identification element on side of the infrastructure entity and means for decrypting the first identification element on side of the communications agent entity, preferably with a key that is only known to the communications agent entity and the infrastructure entity.

An advantageously embodiment of the communications system according to the present invention is characterized in that the infrastructure entity and/or the communications agent entity keeps the first identification element and/or the key secret.

An further embodiment of the communications system according to the present invention is advantageously characterized in that the communications system further comprising means for encrypting the second identification element on side of the services provider respectively service applications provider entity and means for decrypting the second identification element on side of the communications agent, entity preferably with a key that is only known to the communications agent entity and the services provider respectively service applications provider entity.

An advantageously embodiment of the communications system according to the present invention is characterized in that the services provider respectively service applications provider entity and/or the communications agent entity keeps the second identification element and/or the key secret.

The communications system according to the present invention is advantageously further characterized in that none of the databases - so the customers database, the infrastructures database respectively the services database - having information regarding the other databases - so the infrastructures database and the services database, the customers database and the services database, respectively the customers database and the infrastructures database. According to the present invention it is advantageously further possible, that the customers database, the infrastructures database and the services database are maintained within different storage areas of one database entity, whereby it is ensured, that none of the databases - so the customers database, the infrastructures database respectively the services database - having information regarding the other databases - so the infrastructures database and the services database, the customers database and the services database, respectively the customers database and the infrastructures database.

A further advantageously embodiment of the communications system according to the present invention is characterized in that the communications agent entity
- gets a preferably encrypted information item regarding at least one infrastructure entity from an infrastructure entity
   and/or
   gets a preferably encrypted information item regarding at least one service respectively service application entity from a service respectively service application entity,
   whereby the communications agent entity uses the information item regarding at least one infrastructure entity and/or the information item regarding at least one service respectively service application entity for performing a customers database query;
- gets a preferably encrypted information item regarding at least one customer entity from a customer entity
   and/or
   gets a preferably encrypted information item regarding at least one service respectively service application entity from a service respectively service application entity,
   whereby the communications agent entity uses the information item regarding at least one customer entity and/or the information item regarding at least one service respectively service application entity for performing a infrastructure database query;
and/or
- gets a preferably encrypted information item regarding at least one customer entity from a customer entity
   and/or
   gets a preferably encrypted information item regarding at least one infrastructure entity from an infrastructure entity,
   whereby the communications agent entity uses the information item regarding at least one customer entity and/or the information item regarding at least one infrastructure entity for performing a services database query.

As an unclaimed example, a communications agent entity for managing and/or handling usage of services respectively service applications via a communication network of a communication system is proposed, the communications system comprising at least one customer entity, at least one infrastructure entity capable to use services respectively service applications and at least one services provider respectively service applications provider entity, the communications agent entity maintaining
a customers database storing at least one information item regarding at least one customer entity,
   with the at least one information item regarding a customer entity customer-specific respectively customer-preferred information items and/or parameters with regard to the usage of a service respectively service application and/or with regard to the usage of an infrastructure entity are determined/identified or determinable/identifiable from the customers database by the communications agent entity;
an infrastructures database storing at least one information item regarding at least one infrastructure entity,
   with the at least one information item regarding an infrastructure entity at least one service respectively one service application the infrastructure entity is capable to use is determined/identified or determinable/identifiable from the infrastructure database by the communications agent entity;
and
a services database storing at least one information item regarding at least one service respectively service application entity,
   with the at least one information item regarding a service respectively service application entity at least one service and/or service capability the service respectively service application entity is capable to provide is determined/identified or determinable/identifiable from the services database by the communications agent entity;
   and
for performing the usage of a service respectively service application comprising:
   - Means for obtaining/receiving from an infrastructure entity a first identification element,
      the first identification element preferably being created at the infrastructure entity by using at least one information item regarding a customer entity, which information item is obtained/received at the infrastructure entity;
   - means for determining/identifying at least one information item regarding a customer entity out of the obtained/received first identification element, preferably by using at least one information item regarding the infrastructure entity;
   - means for performing a customer database query with the determined/identified information item regarding a customer entity to determine/identify customer-specific respectively customer-preferred information items and/or parameters with regard to the usage of a service respectively service application entity and/or with regard to the usage of an infrastructure entity;
   - means for performing a services database query with the determined/identified customer-specific respectively customer-preferred information items and/or parameters with regard to the usage of a service respectively service application entity and/or with regard to the usage of an infrastructure entity to determine/identify a services provider respectively service applications provider entity;
   - means for sending/transmitting the first identification element to the determined/identified services provider respectively service applications provider entity;
   - means for obtaining/receiving from a services provider respectively service applications provider entity a second identification element,
      the second identification element preferably being created at the services provider respectively service applications provider entity by using the sent/transmitted first identification element;
   - means for sending/transmitting the second identification element to the infrastructure entity, preferably such that the second identification element is usable at the infrastructure entity for a communication setup between the infrastructure entity and the services provider respectively service applications provider entity via the communications agent entity, preferably with certificates according to a standard of the communication network of the communication system.

An advantageously embodiment of the communications agent entity according to the present invention is characterized in that the communications agent entity further comprising means for a secure connection for communication between the communications agent entity and the infrastructure entity, for communication between the communications agent entity and the services provider respectively service applications provider entity and/or for communication between the communications agent entity and the customer entity, preferably an IPSec tunnel, which is established/establishable by the communications agent entity respectively.

A further embodiment of the communications agent entity according to the present invention is advantageously characterized in that the communications agent entity further comprising means for decrypting the first identification element on side of the communications agent entity, preferably with a key that is only known to the communications agent entity and the infrastructure entity.

A further embodiment of the communications agent entity according to the present invention is advantageously characterized in that the communications agent entity further comprising means for decrypting the second identification element on side of the communications agent entity, preferably with a key that is only known to the communications agent entity and the services provider respectively service applications provider entity.

The communications agent entity according to the present invention is advantageously further characterized in that none of the databases - so the customers database, the infrastructures database respectively the services database - having information regarding the other databases - so the infrastructures database and the services database, the customers database and the services database, respectively the customers database and the infrastructures database. According to the present invention it is advantageously further possible, that the customers database, the infrastructures database and the services database are maintained within different storage areas of one database entity, whereby it is ensured, that none of the databases - so the customers database, the infrastructures database respectively the services database - having information regarding the other databases - so the infrastructures database and the services database, the customers database and the services database, respectively the customers database and the infrastructures database.

A further advantageously embodiment of the communications agent entity according to the present invention is characterized in that the communications agent entity
- gets a preferably encrypted information item regarding at least one infrastructure entity from an infrastructure entity
   and/or
   gets a preferably encrypted information item regarding at least one service respectively service application entity from a service respectively service application entity,
   whereby the communications agent entity uses the information item regarding at least one infrastructure entity and/or the information item regarding at least one service respectively service application entity for performing a customers database query;
- gets a preferably encrypted information item regarding at least one customer entity from a customer entity
   and/or
   gets a preferably encrypted information item regarding at least one service respectively service application entity from a service respectively service application entity,
   whereby the communications agent entity uses the information item regarding at least one customer entity and/or the information item regarding at least one service respectively service application entity for performing a infrastructure database query;
and/or
- gets a preferably encrypted information item regarding at least one customer entity from a customer entity
   and/or
   gets a preferably encrypted information item regarding at least one infrastructure entity from an infrastructure entity,
   whereby the communications agent entity uses the information item regarding at least one customer entity and/or the information item regarding at least one infrastructure entity for performing a services database query.

According to another unclaimed example, a customer entity for usage of services respectively service applications via a communication network of a communication system according to the present invention is proposed, wherein the customer entity as a device respectively device entity comprising means designed and/or adapted to perform the steps of a method according to the present invention performed by the customer entity, preferably with a communication agent entity according to the present invention.

Further features, properties, characteristics and/or advantages of the present invention will be explained in detail in the following by means of the exemplary embodiments represented in the figures of the drawing. Herein:
- Fig. 1: shows a schematic diagram of an exemplary embodiment of the communications system respectively communication agent entity according to the present invention; and
- Fig. 2: shows a schematic diagram of an exemplary embodiment of a method according to the present invention.

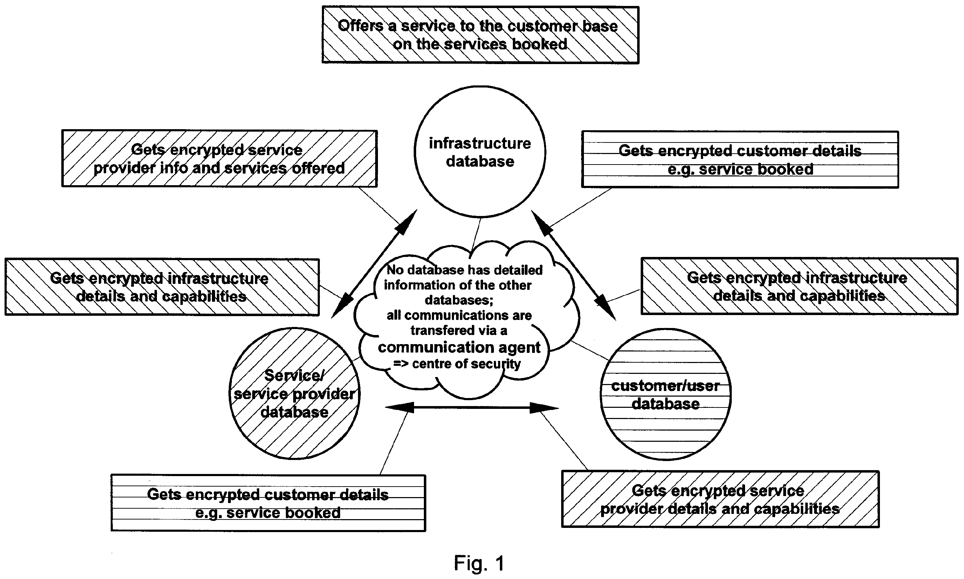

The schematic diagram according to Fig. 1 shows an exemplary embodiment of the communications system respectively communication agent entity according to the present invention.

Advantageously the communications system respectively communication agent entity according to the present invention prerequisites that the infrastructure entity has a secure and not easy changeable information/number like e.g. a RFID for identification.

Any infrastructure number like e.g. key ID, RFID will advantageously be only shared with the associated service providers entities, e.g. manufacturers or third party service providers - e.g. music streaming service. Exchange of infrastructure number could be handled by for example any network, e.g. fixed or mobile communication, advantageously under the mandatory requirement that the network is seen as transport and not used for infrastructure entity identification. E.g. in case an infrastructure entity is identified by an RFID, etc. or any other electronic readable information a mobile device or any other computer, for example even a car entertainment system, can be built to read the information.

After reading, the information will be exchanged with the service providers entity in a secure way. Advantageously the exchange is not limited to e.g. a specific MSISDN, etc.

Further the advantageously encrypted infrastructure number could be exchanged via a file or e.g. data base.

Advantageously it is also possible to use e.g. a secure web page or something similar to exchange the infrastructure number, preferred with an encryption.

According to the present invention a service provider entity creates second identification element as a new Infrastructure ID - IID out of e.g. infrastructure and service number and the service provider entity ID, which advantageously is a certificate or similar.

Especially for security reasons the combination out of both will be e.g. hashed to make sure that only the service provider entity is able to use it.

Each service provider entity will create its own new second identification element new IID and stores it safely.

This new secured second identification element new IID will be exchanged with the infrastructure entity e.g. using any transport, especially managed by e.g. a so called Auto Configuration Server, in a secure way.

The infrastructure entity has to store the IID in a secure area e.g. entertainment system of a car.

An infrastructure entity could have multiple IIDs for multiple service providers entities.

To exchange the infrastructure number and ID any technology/transport is usable and/or supported, preferred like: Bluetooth, WLAN, NFC, RFID, Mobile networks, NB-IOT, MEC, LPWA (licensed or unlicensed), Cable, DSL, Fibre, fixed, and or the like.

A potential well known ACS - Auto Configuration Server, could be used to exchange and manage the required information. Preferably the transport is secured.

Further the communication agent entity advantageously has - preferred independent from other service providers entities - for example the capabilities
- to revoke a subscription, e.g. in case of a stolen car;
- to revoke in case subscription expires;
- to offer customised service e.g. heating in an apartment combining infrastructure entity ID and customer profile; and/or
- to exchange information with e.g. telematics servers via any kind of transport technology.

The mentioned capabilities are preferred, but the present invention is not limited to these.

The solution according to the present invention offers flexibility to use any infrastructure entity and any transport to exchange information.

The solution according to the present invention is advantageously access agnostic. E.g. when a car arrives in the vehicle hall at home the private WiFi could be used to exchange data.

The proposed solution according to the present invention advantageously offers more flexibility as different service providers entities could communicate independently with one and the same the infrastructure entity.

Third party Service Provider do not get any information of the transport like e.g. the MSISDN. Exception would be that e.g. a Service Provider wants to send SMS. But also in this case a combination out of infrastructure entity number and MSISDN is advantageously not required.

Charging according to the present invention is advantageously separated into loT service and mobile communication charging, e.g. SMS. loT charging could be a flat rate or based on data traffic counted by e.g. a specific APN. E.g. service provider like real time traffic information service provider could offer real time data which could be charged by the user of a car or by e.g. service provider like real time traffic information service provider based on termination address.

The solution according to the present invention advantageously correlates a customer entity respectively customer entity ID, a service provider entity respectively service provider entity ID and a - advantageously new - infrastructure entity respectively infrastructure entity ID to offer new services, especially a secure and trustable communication for all communication partners, especially regarding a non-traceable manner such that privacy is given for a customer with regard to the infrastructure entity and/or the services respectively service applications he uses/used.

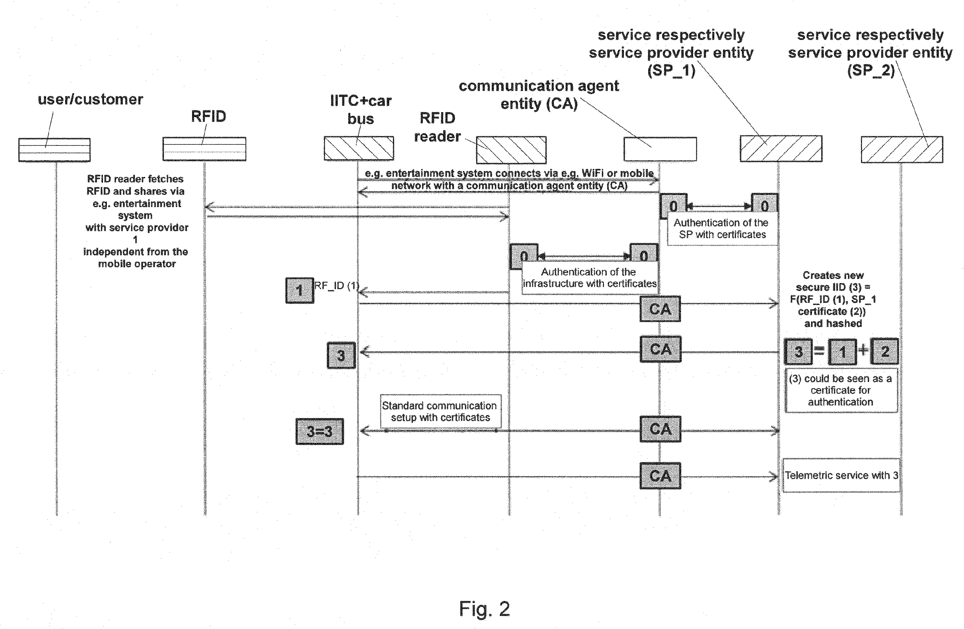

Exemplary services advantageously are for example given as following with/for cars/vehicles (compare for example Fig. 2):
A manufacturer gets secure access to the car/vehicle and requests telemetry data. Here it could also be that different manufacturers get access to different information of the car/vehicle. Therefore, different service provider entities and infrastructure entities number could be used.

Transport Service Provider establishes a connection e.g. via mobile network or via WLAN, etc., not able to identify the vehicle itself.

User/customer enters a car/vehicle and with a combination out of the mobile device, vehicle key or biometrics the user/customer is identified especially as customer entity. After that settings and preferences will be exchanged. E.g. music, seat or heating settings.

User/customer orders a self driving car with his mobile by using a third party app. Due to the different IDs the car comes and knows already customer preferences and destination and could identify the user by his IDs.

This is advantageously only possible as Infrastructure entity ID, User/customer entity ID and Service Provider entity ID are used and they are not based on e.g. car ID or MSISDN from that user/customer.

Further it is advantageously suggested that any transport (e.g. Bluetooth) could be used.

Exemplary services advantageously are for example given as following with/for apartments:
Open doors, do settings like heating light in a secure way etc.

The exemplary embodiments of the present invention that have been represented in the figures of the drawing and haven been described in connection with these ones only serve as explanation of the present invention and are not limiting for this one.

## Claims

1. A method for managing and/or handling usage of services respectively service applications via a communications network of a communications system,
the communications system comprising
at least one customer entity,
at least one infrastructure entity capable to use services respectively service applications
at least one services provider respectively service applications provider entity,
and
at least one communications agent entity maintaining
a customers database storing at least one information item regarding at least one customer entity,
with the at least one information item regarding a customer entity customer-specific respectively customer-preferred information items and/or parameters with regard to the usage of a service respectively service application entity and/or with regard to the usage of an infrastructure entity are determined/identified or determinable/identifiable from the customers database by the communications agent entity,
an infrastructures database storing at least one information item regarding at least one infrastructure entity,
with the at least one information item regarding an infrastructure entity at least one service respectively one service application entity the infrastructure entity is capable to use is determined/identified or determinable/identifiable from the infrastructure database by the communications agent entity,
and
a services database storing at least one information item regarding at least one service respectively service application entity,
with the at least one information item regarding a service respectively service application entity at least one service and/or service capability the service respectively service application entity is capable to provide is determined/identified or determinable/identifiable from the services database by the communications agent entity,
the method comprising the following steps:
- obtaining/receiving at an infrastructure entity at least one information item regarding a customer entity;
- creating at the infrastructure entity a first identification element by using the obtained/received information item regarding a customer entity;
- sending/transmitting the first identification element from the infrastructure entity to the communications agent entity;
- determining/identifying at the communications agent entity at least one information item regarding a customer entity out of the obtained/received first identification element, preferably by using at least one information item regarding the infrastructure entity;
- performing a customer database query with the determined/identified information item regarding a customer entity by the communications agent entity to determine/identify customer-specific respectively customer-preferred information items and/or parameters with regard to the usage of a service respectively service application entity and/or with regard to the usage of an infrastructure entity;
- performing a services database query with the determined/identified customer-specific respectively customer-preferred information items and/or parameters with regard to the usage of a service respectively service application entity and/or with regard to the usage of an infrastructure entity by the communications agent entity to determine/identify a services provider respectively service applications provider entity;
- sending/transmitting the first identification element from the communications agent entity to the determined/identified services provider respectively service applications provider entity;
- creating at the services provider respectively service applications provider entity a second identification element by using the sent/transmitted first identification element, wherein the second identification element is created as a new infrastructure ID, IID, out of an infrastructure number, a service number and a services provider entity ID;
- sending/transmitting the second identification element from the services provider respectively service applications provider entity to the communications agent entity;
- sending/transmitting the second identification element from the communications agent entity to the infrastructure entity;
- using the second identification element at the infrastructure entity for a communication setup between the infrastructure entity and the services provider respectively service applications provider entity via the communications agent entity, preferably with certificates according to a standard of the communication network of the communication system.

2. A method according to claim 1, **characterized in that** a secure connection is used for communication between the communications agent entity and the infrastructure entity, for communication between the communications agent entity and the services provider respectively service applications provider entity and/or for communication between the communications agent entity and the customer entity, preferably an IPSec tunnel, which is established by the communications agent entity respectively.

3. A method according to claim 1 or claim 2, **characterized in that** the first identification element is encrypted on side of the infrastructure entity and decrypted on side of the communications agent entity, preferably with a key that is only known to the communications agent entity and the infrastructure entity.

4. A method according to one or more of the claims 1 to 3, **characterized in that** the second identification element is encrypted on side of the services provider respectively service applications provider entity and decrypted on side of the communications agent entity, preferably with a key that is only known to the communications agent entity and the services provider respectively service applications provider entity.

5. A method according to one or more of the claims 1 to 4, **characterized in that** none of the databases, customers database, infrastructures database respectively services database, having information regarding the other databases, infrastructures database and services database, customers database and services database, respectively customers database and infrastructures database.

6. A method according to one or more of the claims 1 to 5, **characterized in that** the communications agent entity
- gets a preferably encrypted information item regarding at least one infrastructure entity from an infrastructure entity
and/or
gets a preferably encrypted information item regarding at least one service respectively service application entity from a service respectively service application entity,
whereby the communications agent entity uses the information item regarding at least one infrastructure entity and/or the information item regarding at least one service respectively service application entity for performing a customers database query;
- gets a preferably encrypted information item regarding at least one customer entity from a customer entity
and/or
gets a preferably encrypted information item regarding at least one service respectively service application entity from a service respectively service application entity,
whereby the communications agent entity uses the information item regarding at least one customer entity and/or the information item regarding at least one service respectively service application entity for performing an infrastructure database query;
and/or
- gets a preferably encrypted information item regarding at least one customer entity from a customer entity
and/or
gets a preferably encrypted information item regarding at least one infrastructure entity from an infrastructure entity,
whereby the communications agent entity uses the information item regarding at least one customer entity and/or the information item regarding at least one infrastructure entity for performing a services database query.

7. A communications system for managing and/or handling usage of services respectively service applications via a communications network of the communications system, the communications system comprising
at least one customer entity,
at least one infrastructure entity capable to use services respectively service applications
at least one services provider respectively service applications provider,
and
at least one communications agent entity maintaining
a customers database storing at least one information item regarding at least one customer entity,
with the at least one information item regarding a customer entity customer-specific respectively customer-preferred information items and/or parameters with regard to the usage of a service respectively service application entity and/or with regard to the usage of an infrastructure entity are determined/identified or determinable/identifiable from the customers database by the communications agent entity,
an infrastructures database storing at least one information item regarding at least one infrastructure entity,
with the at least one information item regarding an infrastructure entity at least one service respectively one service application entity the infrastructure entity is capable to use is determined/identified or determinable/identifiable from the infrastructure database by the communications agent entity,
and
a services database storing at least one information item regarding at least one service respectively service application entity,
with the at least one information item regarding a service respectively service application entity at least one service and/or service capability the service respectively service application entity is capable to provide is determined/identified or determinable/identifiable from the services database by the communications agent entity,
wherein the communication system is further comprising:
- Means for obtaining/receiving at an infrastructure entity at least one information item regarding a customer entity;
- means for creating at the infrastructure entity a first identification element by using the obtained/received information item regarding a customer entity;
- means for sending/transmitting the first identification element from the infrastructure entity to the communications agent entity;
- means for determining/identifying at the communications agent entity at least one information item regarding a customer entity out of the obtained/received first identification element, preferably by using at least one information item regarding the infrastructure entity;
- means for performing a customer database query with the determined/identified information item regarding a customer entity by the communications agent entity to determine/identify customer-specific respectively customer-preferred information items and/or parameters with regard to the usage of a service respectively service application entity and/or with regard to the usage of an infrastructure entity;
- means for performing a services database query with the determined/identified customer-specific respectively customer-preferred information items and/or parameters with regard to the usage of a service respectively service application entity and/or with regard to the usage of an infrastructure entity by the communications agent entity to determine/identify a services provider respectively service applications provider entity;
- means for sending/transmitting the first identification element from the communications agent entity to the determined/identified services provider respectively service applications provider entity;
- means for creating at the services provider respectively service applications provider entity a second identification element by using the sent/transmitted first identification element, wherein the second identification element is created as a new infrastructure ID, IID, out of an infrastructure number, a service number and a services provider entity ID;
- means for sending/transmitting the second identification element from the services provider respectively service applications provider entity to the communications agent entity;
- means for sending/transmitting the second identification element from the communications agent entity to the infrastructure entity; and/or
- means for using the second identification element at the infrastructure entity for a communication setup between the infrastructure entity and the services provider respectively service applications provider entity via the communications agent entity, preferably with certificates according to a standard of the communication network of the communication system.

8. A communications system according to claim 7, **characterized in that** the communications system further comprising means for a secure connection for communication between the communications agent entity and the infrastructure entity, for communication between the communications agent entity and the services provider respectively service applications provider entity and/or for communication between the communications agent entity and the customer entity, preferably an IPSec tunnel, which is established/establishable by the communications agent entity respectively.

9. A communications system according to one or more of the claim 7 or claim 8, **characterized in that** the communications system further comprising means for encrypting the first identification element on side of the infrastructure entity and means for decrypting the first identification element on side of the communications agent entity, preferably with a key that is only known to the communications agent entity and the infrastructure entity.

10. A communications system according to claim 9, **characterized in that** the infrastructure entity and/or the communications agent entity keeps the first identification element and/or the key secret.

11. A communications system according to one or more of the claims 7 to 10, **characterized in that** the communications system further comprising means for encrypting the second identification element on side of the services provider respectively service applications provider entity and means for decrypting the second identification element on side of the communications agent, entity preferably with a key that is only known to the communications agent entity and the services provider respectively service applications provider.

12. A communications system according to claim 11, **characterized in that** the services provider respectively service applications provider entity and/or the communications agent entity keeps the second identification element and/or the key secret.

13. A communications system according to one or more of the claims 7 to 12, **characterized in that** none of the databases, customers database, infrastructures database respectively services database, having information regarding the other databases, infrastructures database and services database, customers database and services database, respectively customers database and infrastructures database.

14. A communications system according to one or more of the claims 7 to 13, **characterized in that** the communications agent entity
- gets a preferably encrypted information item regarding at least one infrastructure entity from an infrastructure entity
and/or
gets a preferably encrypted information item regarding at least one service respectively service application entity from a service respectively service application entity,
whereby the communications agent entity uses the information item regarding at least one infrastructure entity and/or the information item regarding at least one service respectively service application entity for performing a customers database query;
- gets a preferably encrypted information item regarding at least one customer entity from a customer entity
and/or
gets a preferably encrypted information item regarding at least one service respectively service application entity from a service respectively service application entity,
whereby the communications agent entity uses the information item regarding at least one customer entity and/or the information item regarding at least one service respectively service application entity for performing an infrastructure database query;
and/or
- gets a preferably encrypted information item regarding at least one customer entity from a customer entity
and/or
gets a preferably encrypted information item regarding at least one infrastructure entity from an infrastructure entity,
whereby the communications agent entity uses the information item regarding at least one customer entity and/or the information item regarding at least one infrastructure entity for performing a services database query.

## Patentansprüche

1. Verfahren zur Verwaltung und/oder Handhabung der Nutzung von Diensten bzw. Dienstanwendungen über ein Kommunikationsnetz eines Kommunikationssystems,
wobei das Kommunikationssystem aufweist:
zumindest eine Kundeneinheit,
zumindest eine Infrastruktureinheit, die in der Lage ist, Dienste bzw. Dienstanwendungen zu nutzen,
zumindest eine Dienstanbieter- bzw. Dienstanwendungsanbietereinheit,
und
zumindest eine Kommunikationsagenteneinheit, die
eine Kundendatenbasis unterhält, die zumindest eine Information bezüglich zumindest einer Kundeneinheit speichert,
wobei mit der zumindest einen Information bezüglich einer Kundeneinheit kundenspezifische oder kundenbevorzugte Informationen und/oder Parameter bezüglich der Nutzung einer Dienst- bzw. einer Dienstanwendungseinheit und/oder bezüglich der Nutzung einer Infrastruktureinheit aus der Kundendatenbasis durch die Kommunikationsagenteneinheit bestimmt/identifiziert werden oder bestimmt/identifiziert werden können,
eine Infrastrukturdatenbasis unterhält, die zumindest eine Information bezüglich zumindest einer Infrastruktureinheit speichert,
wobei mit der zumindest einen Information bezüglich einer Infrastruktureinheit zumindest eine Dienst- bzw. eine Dienstanwendungseinheit, welche die Infrastruktureinheit in der Lage ist zu nutzen, aus der Infrastrukturdatenbasis durch die Kommunikationsagenteneinheit bestimmt/identifiziert wird oder bestimmt/identifiziert werden kann,
und
eine Dienstdatenbasis unterhält, die zumindest eine Information bezüglich zumindest einer Dienst- bzw. einer Dienstanwendungseinheit speichert,
wobei mit der zumindest einen Information bezüglich einer Dienst- bzw. einer Dienstanwendungseinheit zumindest ein Dienst und/oder eine Dienstfähigkeit, welche die Dienst- bzw. Dienstanwendungseinheit in der Lage ist bereitzustellen, aus der Dienstdatenbasis durch die Kommunikationsagenteneinheit bestimmt/identifiziert wird oder bestimmt/identifiziert werden kann,
wobei das Verfahren die folgenden Schritte aufweist:
- Erhalten/Empfangen an der Infrastruktureinheit zumindest einer Information bezüglich einer Kundeneinheit;
- Erstellen an der Infrastruktureinheit eines ersten Identifikationselementes unter Verwendung der erhaltenen/empfangenen Information bezüglich einer Kundeneinheit;
- Senden/Übermitteln des ersten Identifikationselementes von der Infrastruktureinheit an die Kommunikationsagenteneinheit;
- Bestimmen/Identifizieren an der Kommunikationsagenteneinheit zumindest einer Information bezüglich einer Kundeneinheit aus dem erhaltenen/empfangenen ersten Identifikationselement, vorzugsweise unter Nutzung der zumindest einen Information bezüglich der Infrastruktureinheit;
- Durchführen einer Kundendatenbasisabfrage mit der bestimmten/identifizierten Information bezüglich einer Kundeneinheit durch die Kommunikationsagenteneinheit, um kundenspezifische oder kundenbevorzugte Informationen und/oder Parameter bezüglich der Nutzung einer Dienst- bzw. einer Dienstanwendungseinheit und/oder bezüglich der Nutzung einer Infrastruktureinheit zu bestimmen/identifizieren;
- Durchführen einer Dienstdatenbasisabfrage mit den bestimmten/identifizierten kundenspezifischen oder kundenbevorzugten Informationen und/oder Parametern bezüglich der Nutzung einer Dienst- bzw. einer Dienstanwendungseinheit und/oder bezüglich der Nutzung einer Infrastruktureinheit durch die Kommunikationsagenteneinheit, um eine Dienstanbieter- bzw. Dienstanwendungsanbietereinheit zu bestimmen/identifizieren;
- Senden/Übermitteln des ersten Identifikationselementes von der Kommunikationsagenteneinheit zu der bestimmten/identifizierten Dienstanbieter- bzw. Dienstanwendungsanbietereinheit;
- Erstellen an der Dienstanbieter- bzw. Dienstanwendungsanbietereinheit eines zweiten Identifikationselementes unter Nutzung des gesendeten/übermittelten ersten Identifikationselementes, wobei das zweite Identifikationselement als eine neue Infrastruktur-ID, IID aus einer Infrastrukturzahl, einer Dienstzahl und einer Dienstanbietereinheits-ID erstellt wird;
- Senden/Übermitteln des zweiten Identifikationselementes von der Dienstanbieter- bzw. Dienstanwendungsanbietereinheit an die Kommunikationsagenteneinheit;
- Senden/Übermitteln des zweiten Identifikationselementes von der Kommunikationsagenteneinheit an die Infrastruktureinheit;
- Nutzung des zweiten Identifikationselementes an der Infrastruktureinheit für einen Kommunikationsaufbau zwischen der Infrastruktureinheit und der Dienstanbieter- bzw. Dienstanwendungsanbietereinheit über die Kommunikationsagenteneinheit, vorzugsweise mit Zertifikaten gemäß einem Standard des Kommunikationsnetzes des Kommunikationssystems.

2. Verfahren gemäß Anspruch 1, **dadurch gekennzeichnet, dass** eine sichere Verbindung genutzt wird für die Kommunikation zwischen der Kommunikationsagenteneinheit und der Infrastruktureinheit, für die Kommunikation zwischen der Kommunikationsagenteneinheit und der Dienstanbieter- bzw. Dienstanwendungsanbietereinheit und/oder für die Kommunikation zwischen der Kommunikationsagenteneinheit und der Kundeneinheit, vorzugsweise ein IPSec-Tunnel, der jeweils von der Kommunikationsagenteneinheit eingerichtet wird.

3. Verfahren gemäß Anspruch 1 oder Anspruch 2, **dadurch gekennzeichnet, dass** das erste Identifikationselement auf Seiten der Infrastruktureinheit verschlüsselt und auf Seiten der Kommunikationsagenteneinheit entschlüsselt wird, vorzugsweise mit einem Schlüssel, der nur der Kommunikationsagenteneinheit und der Infrastruktureinheit bekannt ist.

4. Verfahren gemäß einem oder mehreren der Ansprüche 1 bis 3, **dadurch gekennzeichnet, dass** das zweite Identifikationselement auf Seiten der Dienstanbieter- bzw. Dienstanwendungsanbietereinheit verschlüsselt und auf Seiten der Kommunikationsagenteneinheit entschlüsselt wird, vorzugsweise mit einem Schlüssel, der nur der Kommunikationsagenteneinheit und der Dienstanbieter- bzw. Dienstanwendungsanbietereinheit bekannt ist.

5. Verfahren gemäß einem oder mehreren der Ansprüche 1 bis 4, **dadurch gekennzeichnet, dass** keine der Datenbasen, Kundendatenbasis, Infrastrukturdatenbasis bzw. Dienstdatenbasis, Informationen bezüglich der anderen Datenbasen, Infrastrukturdatenbasis und Dienstdatenbasis, Kundendatenbasis und Dienstdatenbasis, bzw. Kundendatenbasis und Infrastrukturdatenbasis aufweist.

6. Verfahren gemäß einem oder mehreren der Ansprüche 1 bis 5, **dadurch gekennzeichnet, dass** die Kommunikationsagenteneinheit
- eine vorzugsweise verschlüsselte Information bezüglich zumindest einer Infrastruktureinheit von einer Infrastruktureinheit bekommt und/oder
eine vorzugsweise verschlüsselte Information bezüglich zumindest einer Dienst- bzw. Dienstanwendungseinheit von einer Dienst- bzw. Dienstanwendungseinheit bekommt,
wobei die Kommunikationsagenteneinheit die Information bezüglich zumindest einer Infrastruktureinheit und/oder die Information bezüglich zumindest einer Dienst- bzw. Dienstanwendungseinheit zur Durchführung einer Kundendatenbasisabfrage nutzt;
- eine vorzugsweise verschlüsselte Information bezüglich zumindest einer Kundeneinheit von einer Kundeneinheit bekommt
und/oder
eine vorzugsweise verschlüsselte Information bezüglich zumindest einer Dienst- bzw. Dienstanwendungseinheit von einer Dienst- bzw. Dienstanwendungseinheit bekommt,
wobei die Kommunikationsagenteneinheit die Information bezüglich zumindest einer Kundeneinheit und/oder die Information bezüglich einer Dienst- bzw. Dienstanwendungseinheit zur Durchführung einer Infrastrukturdatenbasisabfrage nutzt;
und/oder
- eine vorzugsweise verschlüsselte Information bezüglich zumindest einer Kundeneinheit von einer Kundeneinheit bekommt
und/oder
eine vorzugsweise verschlüsselte Information bezüglich zumindest einer Infrastruktureinheit von einer Infrastruktureinheit bekommt,
wobei die Kommunikationsagenteneinheit die Information bezüglich zumindest einer Kundeneinheit und/oder die Information bezüglich zumindest einer Infrastruktureinheit zur Durchführung einer Dienstdatenbasisabfrage nutzt.

7. Kommunikationssystem zur Verwaltung und/oder Handhabung der Nutzung von Diensten bzw. Dienstanwendungen über ein Kommunikationsnetz des Kommunikationssystems, wobei das Kommunikationssystem aufweist:
zumindest eine Kundeneinheit,
zumindest eine Infrastruktureinheit, die in der Lage ist, Dienste bzw. Dienstanwendungen zu nutzen,
zumindest einen Dienstanbieter- bzw. Dienstanwendungsanbieter,
und
zumindest eine Kommunikationsagenteneinheit , die
eine Kundendatenbasis unterhält, die zumindest eine Information bezüglich zumindest einer Kundeneinheit speichert,
wobei mit der zumindest einen Information bezüglich einer Kundeneinheit kundenspezifische oder kundenbevorzugte Informationen und/oder Parameter bezüglich der Nutzung einer Dienst- bzw. einer Dienstanwendungseinheit und/oder bezüglich der Nutzung einer Infrastruktureinheit aus der Kundendatenbasis durch die Kommunikationsagenteneinheit bestimmt/identifiziert werden oder bestimmt/identifiziert werden können,
eine Infrastrukturdatenbasis unterhält, die zumindest eine Information bezüglich zumindest einer Infrastruktureinheit speichert,
wobei mit der zumindest einen Information bezüglich einer Infrastruktureinheit zumindest eine Dienst- bzw. eine Dienstanwendungseinheit, welche die Infrastruktureinheit in der Lage ist zu nutzen, aus der Infrastrukturdatenbasis durch die Kommunikationsagenteneinheit bestimmt/identifiziert wird oder bestimmt/identifiziert werden kann,
und
eine Dienstdatenbasis unterhält, die zumindest eine Information bezüglich zumindest einer Dienst- bzw. einer Dienstanwendungseinheit speichert,
wobei mit der zumindest einen Information bezüglich einer Dienst- bzw. einer Dienstanwendungseinheit zumindest ein Dienst und/oder eine Dienstfähigkeit, welche die Dienst- bzw. Dienstanwendungseinheit in der Lage ist bereitzustellen, aus der Dienstdatenbasis durch die Kommunikationsagenteneinheit bestimmt/identifiziert wird oder bestimmt/identifiziert werden kann,
wobei das Kommunikationssystem ferner aufqeist:
- Mittel zum Erhalten/Empfangen an einer Infrastruktureinheit von zumindest einer Information bezüglich einer Kundeneinheit;
- Mittel zum Erstellen an der Infrastruktureinheit eines ersten Identifikationselementes unter Verwendung der erhaltenen/empfangenen Information bezüglich einer Kundeneinheit;
- Mittel zum Senden/Übermitteln des ersten Identifikationselementes von der Infrastruktureinheit an die Kommunikationsagenteneinheit;
- Mittel zum Bestimmen/Identifizieren an der Kommunikationsagenteneinheit zumindest einer Information bezüglich einer Kundeneinheit aus dem erhaltenen/empfangenen ersten Identifikationselement, vorzugsweise unter Nutzung der zumindest einen Information bezüglich der Infrastruktureinheit;
- Mittel zum Durchführen einer Kundendatenbasisabfrage mit der bestimmten/identifizierten Information bezüglich einer Kundeneinheit durch die Kommunikationsagenteneinheit, um kundenspezifische oder kundenbevorzugte Informationen und/oder Parameter bezüglich der Nutzung einer Dienst- bzw. einer Dienstanwendungseinheit und/oder bezüglich der Nutzung einer Infrastruktureinheit zu bestimmen/identifizieren;
- Mittel zum Durchführen einer Dienstdatenbasisabfrage mit den bestimmten/identifizierten kundenspezifischen oder kundenbevorzugten Informationen und/oder Parametern bezüglich der Nutzung einer Dienst- bzw. einer Dienstanwendungseinheit und/oder bezüglich der Nutzung einer Infrastruktureinheit durch die Kommunikationsagenteneinheit, um eine Dienstanbieter- bzw. Dienstanwendungsanbietereinheit zu bestimmen/identifizieren;
- Mittel zum Senden/Übermitteln des ersten Identifikationselementes von der Kommunikationsagenteneinheit zu der bestimmten/identifizierten Dienstanbieter- bzw. Dienstanwendungsanbietereinheit;
- Mittel zum Erstellen an der Dienstanbieter- bzw. Dienstanwendungsanbietereinheit eines zweiten Identifikationselementes unter Nutzung des gesendeten/übermittelten ersten Identifikationselementes, wobei das zweite Identifikationselement als eine neue Infrastruktur-ID, IID aus einer Infrastrukturzahl, einer Dienstzahl und einer Dienstanbietereinheits-ID erstellt wird;
- Mittel zum Senden/Übermitteln des zweiten Identifikationselementes von der Dienstanbieter- bzw. Dienstanwendungsanbietereinheit an die Kommunikationsagenteneinheit;
- Mittel zum Senden/Übermitteln des zweiten Identifikationselementes von der Kommunikationsagenteneinheit an die Infrastruktureinheit; und/oder
- Mittel zur Nutzung des zweiten Identifikationselementes an der Infrastruktureinheit für einen Kommunikationsaufbau zwischen der Infrastruktureinheit und der Dienstanbieter- bzw. Dienstanwendungsanbietereinheit über die Kommunikationsagenteneinheit, vorzugsweise mit Zertifikaten gemäß einem Standard des Kommunikationsnetzes des Kommunikationssystems.

8. Kommunikationssystem gemäß Anspruch 7, **dadurch gekennzeichnet, dass** das Kommunikationssystem ferner Mittel aufweist für eine sichere Verbindung für die Kommunikation zwischen der Kommunikationsagenteneinheit und der Infrastruktureinheit, für die Kommunikation zwischen der Kommunikationsagenteneinheit und der Dienstanbieter- bzw. Dienstanwendungsanbietereinheit und/oder für die Kommunikation zwischen der Kommunikationsagenteneinheit und der Kundeneinheit, vorzugsweise ein IPSec-Tunnel, der jeweils von der Kommunikationsagenteneinheit eingerichtet wird/werden kann.

9. Kommunikationssystem gemäß einem oder mehreren des Anspruchs 7 oder des Anspruchs 8, **dadurch gekennzeichnet, dass** das Kommunikationssystem fermer Mittel aufweist zum Verschlüsseln des ersten Identifikationselementes auf Seiten der Infrastruktureinheit und Mittel zum Entschlüsseln des ersten Identifikationselementes auf Seiten der Kommunikationsagenteneinheit, vorzugsweise mit einem Schlüssel, der nur der Kommunikationsagenteneinheit und der Infrastruktureinheit bekannt ist.

10. Kommunikationssystem gemäß Anspruch 9, **dadurch gekennzeichnet, dass** die Infrastruktureinheit und/oder die Kommunikationsagenteneinheit das erste Identifikationselement und/oder den Schlüssel geheim hält/halten.

11. Kommunikationssystem gemäß einem oder mehreren der Ansprüche 7 bis 10, **dadurch gekennzeichnet, dass** das Kommunikationssystem fermer Mittel aufweist zum Verschlüsseln des zweiten Identifikationselementes auf Seiten der Dienstanbieter- bzw. Dienstanwendungsanbietereinheit und Mittel zum Entschlüsseln des zweiten Identifikationselementes auf Seiten der Kommunikationsagenteneinheit, vorzugsweise mit einem Schlüssel, der nur der Kommunikationsagenteneinheit und dem Dienstanbieter bzw. dem Dienstanwendungsanbieter bekannt ist.

12. Kommunikationssystem gemäß Anspruch 11, **dadurch gekennzeichnet, dass** die Dienstanbieter- bzw. Dienstanwendungsanbietereinheit und/oder die Kommunikationsagenteneinheit das zweite Identifikationselement und/oder den Schlüssel geheim hält/halten.

13. Kommunikationssystem gemäß einem oder mehreren der Ansprüche 7 bis 12, **dadurch gekennzeichnet, dass** keine der Datenbasen, Kundendatenbasis, Infrastrukturdatenbasis bzw. Dienstdatenbasis, Informationen bezüglich der anderen Datenbasen, Infrastrukturdatenbasis und Dienstdatenbasis, Kundendatenbasis und Dienstdatenbasis, bzw. Kundendatenbasis und Infrastrukturdatenbasis aufweist.

14. Kommunikationssystem gemäß einem oder mehreren der Ansprüche 7 bis 13, **dadurch gekennzeichnet, dass** die Kommunikationsagenteneinheit
- eine vorzugsweise verschlüsselte Information bezüglich zumindest einer Infrastruktureinheit von einer Infrastruktureinheit bekommt und/oder
eine vorzugsweise verschlüsselte Information bezüglich zumindest einer Dienst- bzw. Dienstanwendungseinheit von einer Dienst- bzw. Dienstanwendungseinheit bekommt,
wobei die Kommunikationsagenteneinheit die Information bezüglich zumindest einer Infrastruktureinheit und/oder die Information bezüglich zumindest einer Dienst- bzw. Dienstanwendungseinheit zur Durchführung einer Kundendatenbasisabfrage nutzt;
- eine vorzugsweise verschlüsselte Information bezüglich zumindest einer Kundeneinheit von einer Kundeneinheit bekommt
und/oder
- eine vorzugsweise verschlüsselte Information bezüglich zumindest einer Dienst- bzw. Dienstanwendungseinheit von einer Dienst- bzw. Dienstanwendungseinheit bekommt,
wobei die Kommunikationsagenteneinheit die Information bezüglich zumindest einer Kundeneinheit und/oder die Information bezüglich einer Dienst- bzw. Dienstanwendungseinheit zur Durchführung einer Infrastrukturdatenbasisabfrage nutzt;
und/oder
- eine vorzugsweise verschlüsselte Information bezüglich zumindest einer Kundeneinheit von einer Kundeneinheit bekommt
und/oder
eine vorzugsweise verschlüsselte Information bezüglich zumindest einer Infrastruktureinheit von einer Infrastruktureinheit bekommt,
wobei die Kommunikationsagenteneinheit die Information bezüglich zumindest einer Kundeneinheit und/oder die Information bezüglich zumindest einer Infrastruktureinheit zur Durchführung einer Dienstdatenbasisabfrage nutzt.

## Revendications

1. Procédé de gestion et/ou de traitement de l'utilisation de services respectivement d'applications de service via un réseau de communications d'un système de communications,
le système de communications comprenant
au moins une entité de clients,
au moins une entité d'infrastructure capable d'utiliser des services respectivement des applications de service,
au moins une entité de fournisseur de services respectivement de fournisseur d'applications de service,
et
au moins une entité d'agent de communications, qui maintient
une base de données de clients, qui stocke au moins une information par rapport à au moins une entité de clients,
et par moyen de l'au moins une information par rapport à une entité de clients, des informations et/ou des paramètres spécifiques aux clients ou des informations et/ou des paramètres préférés des clients par rapport à l'utilisation d'une entité de service respectivement d'une entité d'application de service et/ou par rapport à l'utilisation d'une entité d'infrastructure sont déterminés/identifiés ou sont déterminables /identifiables à partir de la base de données de clients par l'entité d'agent de communications,
une base de données d'infrastructures, qui stocke au moins une information par rapport à au moins une entité d'infrastructure,
et par moyen de l'au moins une information par rapport à une entité d'infrastructure, au moins une entité de service respectivement une entité d'application de service, que l'entité d'infrastructure est capable d'utiliser, est déterminée/identifiée ou est déterminable/identifiable à partir de la base de données d'infrastructure par l'entité d'agent de communications,
et
une base de données de services, qui stocke au moins une information par rapport à au moins une entité de service respectivement une entité d'application de service,
et par moyen de l'au moins une information par rapport à une entité de service respectivement une entité d'application de service, au moins un service et/ou une capacité de service, que l'entité de service respectivement d'application de service est capable de fournir, est déterminé/identifié ou déterminable/identifiable à partir de la base de données de services par l'entité d'agent de communications,
le procédé comprenant les étapes suivantes de:
- obtenir/recevoir au moins une information par rapport à une entité de clients à une entité d'infrastructure;
- créer, à l'entité d'infrastructure, un premier élément d'identification en utilisant l'information obtenue/reçue par rapport à une entité de clients;
- envoyer/transmettre le premier élément d'identification à partir de l'entité d'infrastructure à l'entité d'agent de communications;
- déterminer/identifier, à l'entité d'agent de communications, au moins une information par rapport à une entité de clients à partir du premier élément d'identification obtenu/reçu en utilisant de préférence au moins une information par rapport à l'entité d'infrastructure;
- effectuer une interrogation de la base de données de clients avec l'information déterminée/identifiée par rapport à une entité de clients par l'entité d'agent de communications pour déterminer/identifier des informations et/ou des paramètres spécifiques aux clients ou des informations et/ou des paramètres préférés des clients par rapport à l'utilisation d'une entité de service respectivement d'une entité d'application de service et/ou par rapport à l'utilisation d'une entité d'infrastructure;
- effectuer une interrogation de la base de données de services avec les informations et/ou les paramètres spécifiques aux clients ou les informations et/ou les paramètres préférés des clients par rapport à l'utilisation d'une entité de service respectivement d'une entité d'application de service et/ou par rapport à l'utilisation d'une entité d'infrastructure, lesquelles informations/lesquels paramètres ont été déterminés/identifiés, par l'entité d'agent de communications pour déterminer/identifier une entité de fournisseur de services respectivement une entité de fournisseur d'applications de service;
- envoyer/transmettre le premier élément d'identification à partir de l'entité d'agent de communications à l'entité de fournisseur de services respectivement à l'entité de fournisseur d'applications de service déterminée/identifiée;
- créer, à l'entité de fournisseur de services respectivement à l'entité de fournisseur d'applications de service un deuxième élément d'identification en utilisant le premier élément d'identification envoyé/transmis, dans lequel le deuxième élément d'identification est créé comme un nouveau ID d'infrastructure, IID, sur la base d'un numéro d'infrastructure, d'un numéro de service et d'un identifiant d'entité de fournisseur de services;
- envoyer/transmettre le deuxième élément d'identification à partir de l'entité de fournisseur de services respectivement, l'entité de fournisseur d'applications de service à l'entité d'agent de communications;
- envoyer/transmettre le deuxième élément d'identification à partir de l'entité d'agent de communications à l'entité d'infrastructure;
- utiliser le deuxième élément d'identification à l'entité d'infrastructure pour établir une communication entre l'entité d'infrastructure et l'entité de fournisseur de services respectivement l'entité de fournisseur d'applications de service via l'entité d'agent de communications, de préférence avec des certificats selon un standard du réseau de communications du système de communication.

2. Procédé selon la revendication 1, **caractérisé en ce qu'**une connexion sûre est utilisée pour la communication entre l'entité d'agent de communications et l'entité d'infrastructure, pour la communication entre l'entité d'agent de communications et l'entité de fournisseur de services respectivement l'entité de fournisseur d'applications de service et/ou pour la communication entre l'entité d'agent de communications et l'entité de clients, de préférence un tunnel IPSec, qui est respectivement établi par l'entité d'agent de communications.

3. Procédé selon la revendication 1 ou la revendication 2, **caractérisé en ce que** le premier élément d'identification est crypté par l'entité d'infrastructure et décrypté par l'entité d'agent de communications, de préférence à l'aide d'une clé, qui n'est connue que par l'entité d'agent de communications et par l'entité d'infrastructure.

4. Procédé selon l'une ou plusieurs des revendications 1 à 3, **caractérisé en ce que** le deuxième élément d'identification est crypté par l'entité de fournisseur de services respectivement l'entité de fournisseur d'applications de service et décrypté par l'entité d'agent de communications, de préférence à l'aide d'une clé, qui n'est connue que par l'entité d'agent de communications et par l'entité de fournisseur de services respectivement l'entité de fournisseur d'applications de service.

5. Procédé selon l'une ou plusieurs des revendications 1 à 4, **caractérisé en ce qu'**aucune des bases de données, à savoir la base de données de clients, la base de données d'infrastructures ou la base de données de services, n'a d'informations par rapport aux autres bases de données, à savoir respectivement la base de données d'infrastructures et la base de données de services, la base de données de clients et la base de données de services, la base de données de clients et la base de données d'infrastructures.

6. Procédé selon l'une ou plusieurs des revendications 1 à 5, **caractérisé en ce que** l'entité d'agent de communications
- reçoit une information de préférence cryptée par rapport à au moins une entité d'infrastructure à partir d'une entité d'infrastructure
et/ou
reçoit une information de préférence cryptée par rapport à au moins une entité de services respectivement une entité d'applications de service à partir d'une entité de services respectivement d'une entité d'applications de service,
dans lequel l'entité d'agent de communications utilise l'information par rapport à au moins une entité d'infrastructure et/ou l'information par rapport à au moins une entité de services respectivement une entité d'applications de service pour effectuer une interrogation de base de données de clients;
- reçoit une information de préférence cryptée par rapport à au moins une entité de clients à partir d'une entité de clients
et/ou
reçoit une information de préférence cryptée par rapport à au moins une entité de services respectivement une entité d'applications de service à partir d'une entité de services respectivement d'une entité d'applications de service,
dans lequel l'entité d'agent de communications utilise l'information par rapport à au moins une entité de clients et/ou l'information par rapport à au moins une entité de services respectivement une entité d'applications de service pour effectuer une interrogation de base de données d'infrastructures;
et/ou
- reçoit une information de préférence cryptée par rapport à au moins une entité de clients à partir d'une entité de clients
et/ou
reçoit une information de préférence cryptée par rapport à au moins une entité d'infrastructure à partir d'une entité d'infrastructure,
dans lequel l'entité d'agent de communications utilise l'information par rapport à au moins une entité de clients et/ou l'information par rapport à au moins une entité d'infrastructure pour effectuer une interrogation de base de données de services.

7. Système de communications destiné à la gestion et/ou au traitement de l'utilisation de services respectivement d'applications de service via un réseau de communications du système de communications, le système de communications comprenant
au moins une entité de clients,
au moins une entité d'infrastructure capable d'utiliser des services respectivement des applications de service,
au moins un fournisseur de services respectivement un fournisseur d'applications de service,
et
au moins une entité d'agent de communications, qui maintient
une base de données de clients, qui stocke au moins une information par rapport à au moins une entité de clients,
et par moyen de l'au moins une information par rapport à une entité de clients, des informations et/ou des paramètres spécifiques aux clients ou des informations et/ou des paramètres préférés des clients par rapport à l'utilisation d'une entité de service respectivement d'une entité d'application de service et/ou par rapport à l'utilisation d'une entité d'infrastructure sont déterminés/identifiés ou sont déterminables /identifiables à partir de la base de données de clients par l'entité d'agent de communications,
une base de données d'infrastructures, qui stocke au moins une information par rapport à au moins une entité d'infrastructure,
et par moyen de l'au moins une information par rapport à une entité d'infrastructure, au moins une entité de service respectivement une entité d'application de service, que l'entité d'infrastructure est capable d'utiliser, est déterminée/identifiée ou est déterminable/identifiable à partir de la base de données d'infrastructure par l'entité d'agent de communications,
et
une base de données de services, qui stocke au moins une information par rapport à au moins une entité de service respectivement une entité d'application de service,
et par moyen de l'au moins une information par rapport à une entité de service respectivement une entité d'application de service, au moins un service et/ou une capacité de service, que l'entité de service respectivement d'application de service est capable de fournir, est déterminé/identifié ou déterminable/identifiable à partir de la base de données de services par l'entité d'agent de communications,
dans lequel le système de communications comprend en outre:
- des moyens pour obtenir/recevoir au moins une information par rapport à une entité de clients à une entité d'infrastructure;
- des moyens pour créer, à l'entité d'infrastructure, un premier élément d'identification en utilisant l'information obtenue/reçue par rapport à une entité de clients;
- des moyens pour envoyer/transmettre le premier élément d'identification à partir de l'entité d'infrastructure à l'entité d'agent de communications;
- des moyens pour déterminer/identifier, à l'entité d'agent de communications, au moins une information par rapport à une entité de clients à partir du premier élément d'identification obtenu/reçu, en utilisant de préférence au moins une information par rapport à l'entité d'infrastructure;
- des moyens pour effectuer une interrogation de la base de données de clients avec l'information déterminée/identifiée par rapport à une entité de clients par l'entité d'agent de communications pour déterminer/identifier des informations et/ou des paramètres spécifiques aux clients ou des informations et/ou des paramètres préférés des clients par rapport à l'utilisation d'une entité de service respectivement d'une entité d'application de service et/ou par rapport à l'utilisation d'une entité d'infrastructure;
- des moyens pour effectuer une interrogation de la base de données de services avec les informations et/ou les paramètres spécifiques aux clients ou les informations et/ou les paramètres préférés des clients par rapport à l'utilisation d'une entité de service respectivement d'une entité d'application de service et/ou par rapport à l'utilisation d'une entité d'infrastructure, lesquelles informations/lesquels paramètres ont été déterminés/identifiés, par l'entité d'agent de communications pour déterminer/identifier une entité de fournisseur de services respectivement une entité de fournisseur d'applications de service;
- des moyens pour envoyer/transmettre le premier élément d'identification à partir de l'entité d'agent de communications à l'entité de fournisseur de services respectivement à l'entité de fournisseur d'applications de service déterminée/identifiée;
- des moyens pour créer, à l'entité de fournisseur de services respectivement à l'entité de fournisseur d'applications de service un deuxième élément d'identification en utilisant le premier élément d'identification envoyé/transmis, dans lequel le deuxième élément d'identification est créé comme un nouveau ID d'infrastructure, IID, sur la base d'un numéro d'infrastructure, d'un numéro de service et d'un identifiant d'entité de fournisseur de services;
- des moyens pour envoyer/transmettre le deuxième élément d'identification à partir de l'entité de fournisseur de services respectivement, l'entité de fournisseur d'applications de service à l'entité d'agent de communications;
- des moyens pour envoyer/transmettre le deuxième élément d'identification à partir de l'entité d'agent de communications à l'entité d'infrastructure; et/ou
- des moyens pour utiliser le deuxième élément d'identification à l'entité d'infrastructure pour établir une communication entre l'entité d'infrastructure et l'entité de fournisseur de services respectivement l'entité de fournisseur d'applications de service via l'entité d'agent de communications, de préférence avec des certificats selon un standard du réseau de communications du système de communications.

8. Système de communications selon la revendication 7, **caractérisé en ce que** le système de communications comprend en outre des moyens pour une connexion sûre pour la communication entre l'entité d'agent de communications et l'entité d'infrastructure, pour la communication entre l'entité d'agent de communications et l'entité de fournisseur de services respectivement l'entité de fournisseur d'applications de service et/ou pour la communication entre l'entité d'agent de communications et l'entité de clients, de préférence un tunnel IPSec, qui est respectivement établi/établissable par l'entité d'agent de communications.

9. Système de communications selon l'une ou plusieurs de la revendication 7 ou la revendication 8, **caractérisé en ce que** le système de communications comprend en outre des moyens pour crypter le premier élément d'identification par l'entité d'infrastructure et des moyens pour décrypter le premier élément d'identification par l'entité d'agent de communications, de préférence à l'aide d'une clé, qui n'est connue que par l'entité d'agent de communications et par l'entité d'infrastructure.

10. Système de communications selon la revendication 9, **caractérisé en ce que** l'entité d'infrastructure et/ou l'entité d'agent de communications garde(nt) le premier élément d'identification et/ou la clé secret(s).

11. Système de communications selon l'une ou plusieurs des revendications 7 à 10, **caractérisé en ce que** le système de communications comprend en outre des moyens pour crypter le deuxième élément d'identification par l'entité de fournisseur de services respectivement l'entité de fournisseur d'applications de service et des moyens pour décrypter le deuxième élément d'identification par l'entité d'agent de communications, de préférence à l'aide d'une clé, qui n'est connue que par l'entité d'agent de communications et par l'entité de fournisseur de services respectivement l'entité de fournisseur d'applications de service.

12. Système de communications selon la revendication 11, **caractérisé en ce que** l'entité de fournisseur de services respectivement l'entité de fournisseur d'applications de service et/ou l'entité d'agent de communications garde(nt) le deuxième élément d'identification et/ou la clé secret(s).

13. Système de communications selon l'une ou plusieurs des revendications 7 à 12, **caractérisé en ce qu'**aucune des bases de données, à savoir la base de données de clients, la base de données d'infrastructures ou la base de données de services, n'a d'informations par rapport aux autres bases de données, à savoir respectivement la base de données d'infrastructures et la base de données de services, la base de données de clients et la base de données de services, la base de données de clients et la base de données d'infrastructures.

14. Système de communications selon l'une ou plusieurs des revendications 7 à 13, **caractérisé en ce que** l'entité d'agent de communications
- reçoit une information de préférence cryptée par rapport à au moins une entité d'infrastructure à partir d'une entité d'infrastructure et/ou
reçoit une information de préférence cryptée par rapport à au moins une entité de services respectivement une entité d'applications de service à partir d'une entité de services respectivement d'une entité d'applications de service,
dans lequel l'entité d'agent de communications utilise l'information par rapport à au moins une entité d'infrastructure et/ou l'information par rapport à au moins une entité de services respectivement une entité d'applications de service pour effectuer une interrogation de base de données de clients;
- reçoit une information de préférence cryptée par rapport à au moins une entité de clients à partir d'une entité de clients
et/ou
reçoit une information de préférence cryptée par rapport à au moins une entité de services respectivement une entité d'applications de service à partir d'une entité de services respectivement d'une entité d'applications de service,
dans lequel l'entité d'agent de communications utilise l'information par rapport à au moins une entité de clients et/ou l'information par rapport à au moins une entité de services respectivement une entité d'applications de service pour effectuer une interrogation de base de données d'infrastructures;
et/ou
- reçoit une information de préférence cryptée par rapport à au moins une entité de clients à partir d'une entité de clients
et/ou
reçoit une information de préférence cryptée par rapport à au moins une entité d'infrastructure à partir d'une entité d'infrastructure,
dans lequel l'entité d'agent de communications utilise l'information par rapport à au moins une entité de clients et/ou l'information par rapport à au moins une entité d'infrastructure pour effectuer une interrogation de base de données de services.
